# EUROPEAN PATENT SPECIFICATION

(11) **EP 4 119 334 B1**
(45) Date of publication and mention of the grant of the patent: **08.05.2024**
(21) Application number: 22184116.6
(22) Date of filing: 11.07.2022
(51) Int. Cl.: B29C 70/30, B29D 99/00

(54) **COMPOSITE MATERIAL STRUCTURE AND MANUFACTURING METHOD OF COMPOSITE MATERIAL STRUCTURE**
VERBUNDMATERIALSTRUKTUR UND VERFAHREN ZUR HERSTELLUNG EINER VERBUNDMATERIALSTRUKTUR
STRUCTURE EN MATÉRIAU COMPOSITE ET PROCÉDÉ DE FABRICATION D'UNE STRUCTURE EN MATÉRIAU COMPOSITE

(30) Priority: 14.07.2021 JP 2021116389
(43) Date of publication of application: 18.01.2023
(73) Proprietor: Mitsubishi Heavy Industries, Ltd., Tokyo 100-8332 (JP)
(72) Inventor: Terasaka, Akihiro, Chiyoda-ku Tokyo 100-8332 (JP)
(74) Representative: Hoffmann Eitle

(56) References cited:
- WO-A2-01/62495
- US-A1- 2012 292 446
- US-A1- 2015 360 440
- US-A1- 2016 107 432

## Description

### BACKGROUND OF THE INVENTION

### 1. FIELD OF THE INVENTION

The present disclosure relates to a composite material structure and a manufacturing method of the composite material structure.

### 2. DESCRIPTION OF RELATED ART

For aircraft components such as a fuselage or a main wing of an aircraft, a composite material such as carbon fiber reinforced plastic (CFRP) may be used, for example. As a structure made of a composite material used for an aircraft component, there is a structure obtained by bonding curved components to each other and filling a clearance formed between curved portions with a filler formed of a composite material (for example, Japanese Patent No. 6360672).

The filler formed of a composite material is shaped by die molding, pultrusion molding, or the like, for example. Die molding is a shaping method of pressing a composite material against a die having a predetermined shape by using a roller or the like. Further, pultrusion molding is a shaping method of passing a composite material fed by a roller or the like through a die having a predetermined shape.

A shaped filler is attached to a predetermined position of a curved structure component. Then, the structure component with the filler attached thereto is cured by a heating operation using an autoclave or the like, for example, and thereby the filler and the structure component are bonded to each other.

Japanese Patent No. 6360672 is an example of the related art.

When the filler is manufactured by shaping a single fiber reinforced sheet (for example, prepreg) by die molding, pultrusion molding, or the like, the fiber direction of the filler (longitudinal direction of the fiber) becomes the same as a whole. Specifically, for example, when a filler is formed by shaping a fiber reinforced sheet having the fiber direction in a predetermined direction, the filler will have the fiber direction in the predetermined direction as a whole.

On the other hand, in the structure component, a curved portion or the like is formed by deforming a laminated body of multi-layered fiber reinforced sheets (hereinafter, referred to as "charge"). The charge is formed by laminating a plurality of reinforced fiber sheets having different fiber directions (directions in which fibers extend) in order to improve the strength.

Fiber reinforced sheets has a property of less expanding in the fiber direction and easily expanding in a direction intersecting the fiber direction. Thus, the fiber reinforced sheet has different thermal expansion ratios depending on the direction. Therefore, a filler formed of fiber reinforced sheets whose fiber directions are the same in a predetermined direction and a structure component having a plurality of fiber reinforced sheets whose fiber directions are different from each other have different thermal expansion ratios in respective directions. Specifically, the filler has a lower thermal expansion ratio than the structure component in a predetermined direction, and the filler has a higher thermal expansion ratio than the structure component in a direction intersecting the predetermined direction. Thus, when a composite material to which the filler is attached is heated or cooled for bonding the filler and the structure component to each other, a thermal stress occurs in the filler and the structure component due to a difference in thermal expansion. Accordingly, a crack may occur in the filler and/or the structure component, or a warp may occur in the filler or the structure component, and thereby the filler may be peeled off from the structure component. When a crack or peeling occurs in the filler or the structure component, the composite material structure in which the filler and the structure component are bonded may degrade in strength.

WO 01/62495 A2 discloses a composite material structure and a manufacturing method for such composite material with the pre-characterizing features of claims 1 and 6.

The present disclosure has been made in view of such circumstances and intends to provide a composite material structure and a manufacturing method of the composite material structure that can reduce strength degradation of the composite material structure.

### BRIEF SUMMARY OF THE INVENTION

This object is solved by a composite material structure with the features of claim 1 and a manufacturing method with the features of claim 6. Preferred embodiments follow from the other claims.

To achieve the above object, the composite material structure and the manufacturing method of the composite material structure of the present disclosure employ the following solutions.

The composite material structure according to one aspect of the present disclosure includes: a first structure having a plurality of laminated fiber reinforced sheets and curved at a curved portion; and a filler having a plurality of laminated fiber reinforced sheets and provided in a clearance formed between the curved portion and a second structure arranged side by side along a laminating direction with the first structure, the filler being attached to the curved portion. The plurality of fiber reinforced sheets included in the first structure have different fiber directions and include a first fiber reinforced sheet whose fiber direction that is a fiber extending direction is a first direction. The plurality of fiber reinforced sheets included in the filler have different fiber directions and include the first fiber reinforced sheet a ratio of a total length in the laminating direction of the first fiber reinforced sheet to a total length in the laminating direction of all the fiber reinforced sheets in the first structure and a ratio of a total length in the laminating direction of the first fiber reinforced sheet to a total length in the laminating direction of all the fiber reinforced sheets in the filler are substantially the same.

Further, the manufacturing method of the composite material structure according to one aspect of the present disclosure is a manufacturing method of a composite material structure including a first structure having a plurality of laminated fiber reinforced sheets and curved at a curved portion and a filler having a plurality of laminated fiber reinforced sheets and provided in a clearance formed between the curved portion and a second structure arranged side by side along a laminating direction with the first structure, the filler being attached to the curved portion, and the manufacturing method includes: a structure production step of producing the first structure from the plurality of fiber reinforced sheets having a different fiber directions and including a first fiber reinforced sheet whose fiber direction that is a fiber extending direction is a first direction; and a filler production step of producing the filler from the plurality of fiber reinforced sheets having different fiber directions and including the first fiber reinforced sheet. The structure production step and the filler production step produce the first structure and the filler so that a ratio of a total length in the laminating direction of the first fiber reinforced sheet to a total length in the laminating direction of all the fiber reinforced sheets in the first structure and a ratio of a total length in the laminating direction of the first fiber reinforced sheet to a total length in the laminating direction of all the fiber reinforced sheets in the filler are substantially the same.

According to the present disclosure, it is possible to reduce strength degradation of a composite material structure.

### BRIEF DESCRIPTION OF THE SEVERAL VIEWS OF THE DRAWINGS

Fig. 1 is a side view illustrating a composite material structure according to an embodiment of the present disclosure.
Fig. 2 is a perspective view of a structure component used for the composite material structure according to the embodiment of the present disclosure.
Fig. 3 is a perspective view of a filler used for a composite material component according to the embodiment of the present disclosure.
Fig. 4 is a perspective view illustrating a plurality of fiber reinforced sheets used for the structure component according to the embodiment of the present disclosure.
Fig. 5 is a diagram illustrating a method for manufacturing the filler according to the embodiment of the present disclosure.
Fig. 6 is a diagram illustrating a method for manufacturing a filler according to a modified example of the embodiment of the present disclosure.
Fig. 7 is a diagram illustrating a method for manufacturing the composite material structure according to the embodiment of the present disclosure.
Fig. 8 is a diagram illustrating a method for manufacturing a composite material structure according to a modified example of the embodiment of the present disclosure.
Fig. 9 is a diagram illustrating a method for manufacturing a composite material structure according to a modified example of the embodiment of the present disclosure.

### DETAILED DESCRIPTION OF THE INVENTION

One embodiment of a composite material structure and a manufacturing method of the composite material structure according to the present disclosure will be described below with reference to the drawings.

In the drawings and the following description, the longitudinal direction of the filler is defined as an X-axis direction, one direction out of directions orthogonal to the X-axis direction is defined as a Y-axis direction, and a direction orthogonal to the X-axis direction and the Y-axis direction is defined as a Z-axis direction.

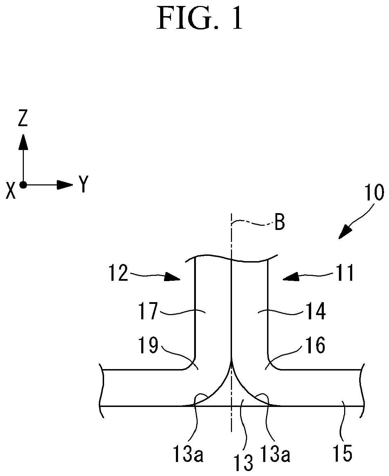

As illustrated in Fig. 1, a composite material structure 10 according to the present embodiment includes a first structure component (first structure) 11 formed of a composite material, a second structure component (second structure) 12 formed of a composite material and bonded to the first structure component 11, and a filler 13 formed of a composite material and provided in a clearance formed between the first structure component 11 and the second structure component 12. The composite material structure 10 is used for a stringer, a spar, a frame, a rib, and the like that are aircraft components forming an aircraft structure, for example.

The first structure component 11 and the second structure component 12 have substantially the same structure. Further, the first structure component 11 and the second structure component 12 are arranged side by side to be symmetrical with respect to a reference plane B passing through the center of the Y-axis direction of the filler 13. The structure and the manufacturing method of the first structure component 11 will be mainly described below as a representative, and the detailed description of the structure and the manufacturing method of the second structure component 12 will be omitted as appropriate.

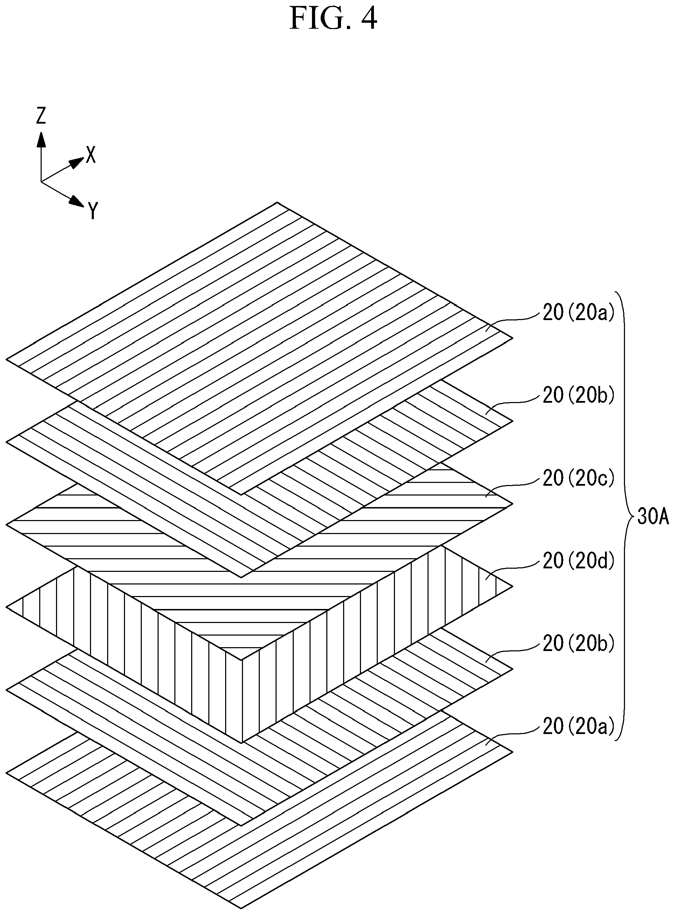

The first structure component 11 is formed by laminating a plurality of fiber reinforced sheets 20 (see Fig. 4) whose fiber extending directions (hereinafter, referred to as "fiber directions") are different from each other. Thus, the first structure component 11 has a plurality of fiber reinforced sheets 20 having different fiber directions. In the fiber reinforced sheet 20, a resin is impregnated into a plurality of fibers extending in the predetermined direction. Examples of the fiber reinforced sheet 20 includes prepreg. The fiber reinforced sheet 20 may be thermoplastic or may be thermosetting.

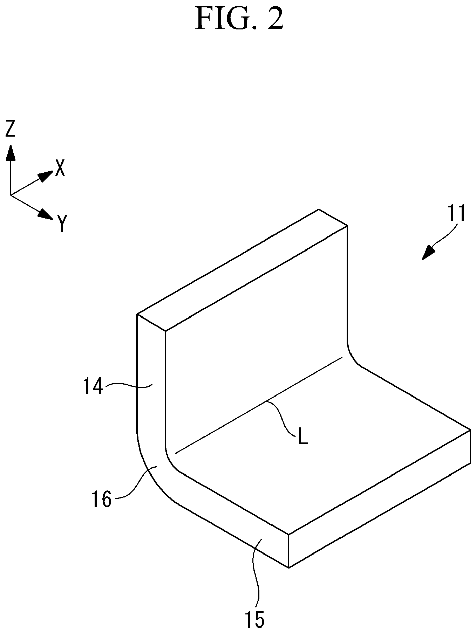

As illustrated in Fig. 1 and Fig. 2, the cross-sectional shape of the first structure component 11 taken along a cross section orthogonal to the X-axis direction is substantially an L-shape. The first structure component 11 has a plate-like bonding portion 14 extending in the X-axis direction and the Z-axis direction, a plate-like planar plate portion 15 extending in the X-axis direction and the Y-axis direction, and a curved portion 16 connected between the bonding portion 14 and the planar plate portion 15.

As illustrated in Fig. 1, the outer circumferential surface of the bonding portion 14 is bonded to the outer circumferential surface of the bonding portion 17 of the second structure component 12.

The curved portion 16 connects an end in the Z-axis direction of the bonding portion 14 to an end in the Y-axis direction of the planar plate portion 15. The cross-sectional shape of the curved portion 16 taken along a cross section orthogonal to the X-axis direction is an arc shape with substantially 90 degrees. The outer circumferential surface (a surface on the outer side in the radial direction) of the curved portion 16 is arranged so as to face the outer circumferential surface of the curved portion 19 of the second structure component 12. The outer circumferential surface of the curved portion 16 and the outer circumferential surface of the curved portion 19 of the second structure component 12 are spaced apart from each other.

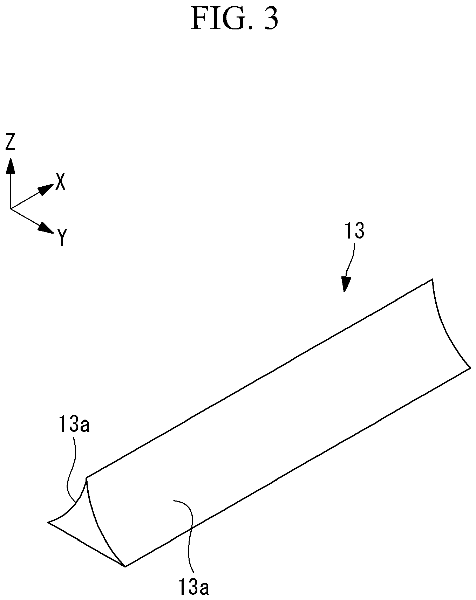

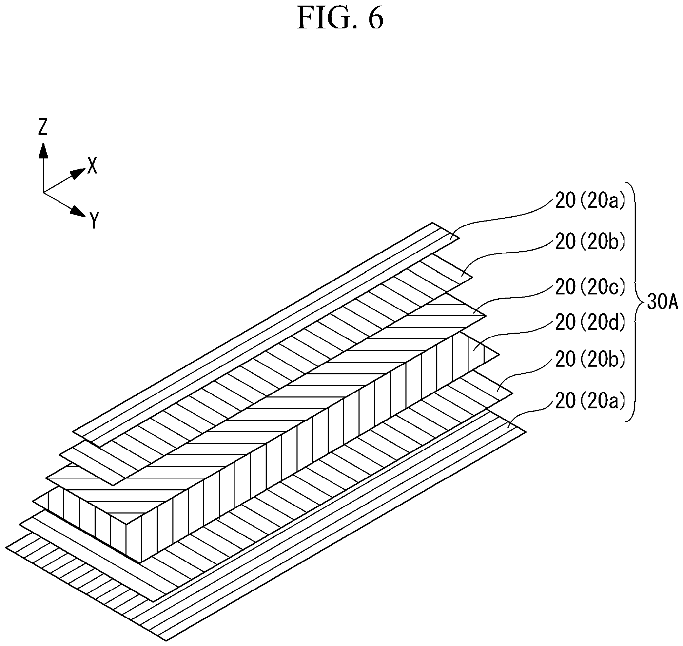

The filler 13 has a plurality of fiber reinforced sheets 20 whose fiber directions are different from each other (see Fig. 6). The filler 13 is formed by laminating the plurality of fiber reinforced sheets 20. As illustrated in Fig. 1, the filler 13 is provided in a clearance formed between the outer circumferential surface of the curved portion 16 of the first structure component 11 and the outer circumferential surface of the curved portion 19 of the second structure component 12. As illustrated in Fig. 3, the filler 13 is a member extending in the X-axis direction. The cross-sectional shape of the filler 13 taken along a cross section orthogonal to the X-axis direction is substantially a triangular shape. For details, a surface corresponding to an oblique side is curved so as to be concaved in accordance with the curved portion 16 and the curved portion 19. Hereinafter, the concaved curved surface is referred to as a curved surface 13a. Two curved surfaces 13a of the filler 13 are bonded to the outer circumferential surface of the curved portion 16 and the outer circumferential surface of the curved portion 19.

A method of manufacturing the composite material structure 10 will be described.

First, the first structure component 11 is produced. A method for creating a charge 30A used for producing the first structure component 11 will be described with reference to Fig. 4. Fig. 4 is a perspective view when the plurality of fiber reinforced sheets 20 forming the charge 30A are disassembled. The charge 30A is formed by laminating the plurality of fiber reinforced sheets 20 whose fiber directions are different from each other.

The plurality of fiber reinforced sheets 20 have a first fiber reinforced sheet 20a whose fiber direction is the X-axis direction (first direction), a second fiber reinforced sheet 20b whose fiber direction is the Y-axis direction (second direction), a third fiber reinforced sheet 20c whose fiber direction is angled by 45 degrees relative to the X-axis direction, and a fourth fiber reinforced sheet 20d whose fiber direction is angled by 45 degrees relative to the X-axis direction (a direction different from the fiber direction of the third fiber reinforced sheet 20c). The charge 30 having a shape of a planar plate or a shape close to a planar plate is produced by laminating the plurality of fiber reinforced sheets 20 in the Z-axis direction. For details, in the present embodiment, as one example as illustrated in Fig. 4, the first fiber reinforced sheet 20a, the second fiber reinforced sheet 20b, the fourth fiber reinforced sheet 20d, the third fiber reinforced sheet 20c, the second fiber reinforced sheet 20b, and the first fiber reinforced sheet 20a are laminated in this order from the lower end of the Z-axis direction.

After the charge 30A is produced, a bending process is performed on the charge 30A. In this process, as illustrated in Fig. 2, the bending process is performed so that a bending line L matches the X-axis direction. Further, the bending process is performed so that the bonding portion 14 and the planar plate portion 15 form substantially 90 degrees.

In such a way, the first structure component 11 is produced (in a structure production step).

Next, the second structure component 12 is produced by the same method as in the case of the first structure component 11.

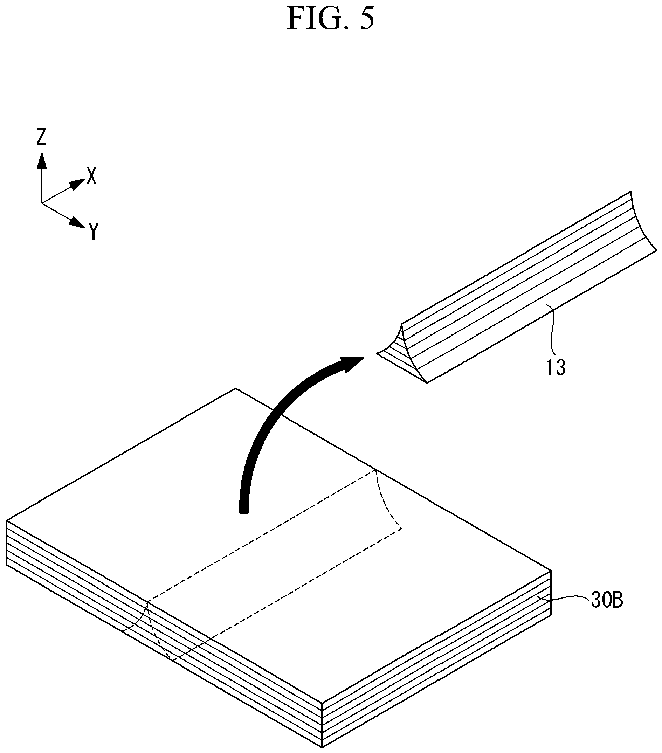

Next, the filler 13 is produced. A method for creating a charge 30B (see Fig. 5) used for production of the filler 13 will be described. The charge 30B is formed by laminating the plurality of fiber reinforced sheets 20 whose fiber directions are different from each other in the same manner as in the case of the charge 30A used for producing the first structure component 11.

Further, the charge 30B has the same structure as the charge 30A. Thus, the first fiber reinforced sheet 20a, the second fiber reinforced sheet 20b, the fourth fiber reinforced sheet 20d, the third fiber reinforced sheet 20c, the second fiber reinforced sheet 20b, and the first fiber reinforced sheet 20a are laminated in this order from the lower end in the Z-axis direction in the same manner as the charge 30A, and thereby the charge 30B similarly has a shape of a planar plate or a shape close to a planar plate.

After the charge 30B is produced, as illustrated in the arrow of Fig. 5, the filler 13 is cut out from the charge 30B. In such a way, the filler 13 is produced (in a filler production step). By cutting out the filler 13 from the charge 30B in such a way, it is possible to easily produce the filler 13.

As described above, in the present embodiment, a ratio of the number of first fiber reinforced sheets 20a to the total number of fiber reinforced sheets 20 (hereinafter, referred to as "a ratio of laminated sheets") is the same between the first structure component 11 and the filler 13. Similarly, each ratio of laminated sheets of the second fiber reinforced sheet 20b, the third fiber reinforced sheet 20c, and the fourth fiber reinforced sheet 20d is the same between the first structure component 11 and the filler 13.

In the present embodiment, the length (thickness) in the Z-axis direction of each fiber reinforced sheet 20 (the first fiber reinforced sheet 20a, the second fiber reinforced sheet 20b, the third fiber reinforced sheet 20c, and the fourth fiber reinforced sheet 20d) included in the first structure component 11 is the same as the length (thicknesses) in the Z-axis direction of each fiber reinforced sheet 20 included in the filler 13. Therefore, in the present embodiment with the same ratio of laminated sheets, the ratio of the total length in the Z-axis direction of the respective fiber reinforced sheets 20 to the total length in the Z-axis direction of all the fiber reinforced sheets 20 in the first structure component 11 is substantially the same as the ratio of the total length in the Z-axis direction of the respective fiber reinforced sheets 20 to the total length in the Z-axis direction of all the fiber reinforced sheets 20 in the filler 13.

The total length in the Z-axis direction of all the fiber reinforced sheets in the first structure component 11 is, in other words, the length (thickness) in the Z-axis direction of the charge 30A (see Fig. 4). Similarly, the total length in the Z-axis direction of all the fiber reinforced sheets 20 in the filler 13 is, in other words, the length (thickness) in the Z-axis direction of the charge 30B (see Fig. 5). Further, the total length in the Z-axis direction of the fiber reinforced sheets 20 is, in other words, a value obtained by multiplying the length in the Z-axis direction of each fiber reinforced sheet 20 by the number of fiber reinforced sheets 20 included in the charge 30A or the charge 30B. For example, when the charge 30A has two first fiber reinforced sheets 20a, the total length in the Z-axis direction of the first fiber reinforced sheets 20a is twice the length in the Z-axis direction of the first fiber reinforced sheet 20a.

Note that, in the following description, a ratio of the total length in the Z-axis direction of the respective fiber reinforced sheets 20 to the total length in the Z-axis direction of all the fiber reinforced sheets 20 in the first structure component 11 or the filler 13 is simply referred to as a "laminate ratio".

Further, in the present embodiment, the laminated order of the first fiber reinforced sheet 20a, the second fiber reinforced sheet 20b, the third fiber reinforced sheet 20c, and the fourth fiber reinforced sheet 20d is the same between the first structure component 11 and the filler 13.

Next, as illustrated in Fig. 1, the bonding portion 14 of the first structure component 11 and the bonding portion 17 of the second structure component 12 are fixed. Next, the filler 13 is attached to the first structure component 11 and the second structure component 12. For details, the filler 13 is attached to the curved portion 16 of the first structure component 11 and the curved portion 19 of the second structure component 12, and the clearance formed between the curved portion 16 and the curved portion 19 is filled with the filler 13.

Next, the first structure component 11, the second structure component 12, and the filler 13 are cured and thereby bonded to each other. The method for curing the first structure component 11, the second structure component 12, and the filler 13 is not particularly limited. For example, curing is performed by a heating operation using an autoclave or the like.

In such a way, the composite material structure 10 is manufactured.

Note that a method for producing the filler 13 is not limited to the method described above. For example, as illustrated in Fig. 6, the fiber reinforced sheets 20 having different lengths in the Y-axis direction may be laminated in the Z-axis direction to produce the filler 13. Specifically, the first fiber reinforced sheet 20a, the second fiber reinforced sheet 20b, the third fiber reinforced sheet 20c, and the fourth fiber reinforced sheet 20d may be processed so that the length in the Y-axis direction gradually increases from the upper end in the Z-axis direction, and these processed sheets may be laminated to produce the filler 13. Note that, also in such a case, the laminate ratio and the laminated order of respective fiber reinforced sheets are the same as the laminate ratio and the order of the first structure component 11.

In this state, the laminate ratio of the first fiber reinforced sheet 20a to all the fiber reinforced sheets 20 is the same as or substantially the same as the laminate ratio of the first fiber reinforced sheet 20a in the filler 13 described later. Similarly, the laminate ratio of the second fiber reinforced sheet 20b, the laminate ratio of the third fiber reinforced sheet 20c, and the laminate ratio of the fourth fiber reinforced sheet 20d are the same as or substantially the same as the laminate ratio of the second fiber reinforced sheet 20b, the laminate ratio of the third fiber reinforced sheet 20c, and the laminate ratio of the fourth fiber reinforced sheet 20d in the filler 13, respectively.

By producing the filler 13 in such a way, it is possible to reduce the amount of the fiber reinforced sheet 20 that is waste when producing the filler 13.

According to the present embodiment, the following effects and advantages are achieved.

The fiber reinforced sheet 20 less expands in the fiber direction and easily expands in a direction intersecting the fiber direction.

In the present embodiment, the laminate ratio of the fiber reinforced sheets 20 in all the fiber directions (four types of fiber reinforced sheets 20 of the first fiber reinforced sheet 20a, the second fiber reinforced sheet 20b, the third fiber reinforced sheet 20c, and the fourth fiber reinforced sheet 20d in the present embodiment) is the same between the first structure component 11 and the filler 13. Similarly, the second structure component 12 has the same laminate ratio as the filler 13.

Accordingly, the thermal expansion ratios of the first structure component 11, the second structure component 12, and the filler 13 are substantially the same in all the fiber directions. Therefore, when the first structure component 11, the second structure component 12, and the filler 13 are heated or cooled in a state where the filler 13 is attached to the first structure component 11 and the second structure component 12, a crack or peeling is less likely to occur in the first structure component 11, the second structure component 12, and the filler 13. It is thus possible to reduce strength degradation of the composite material structure 10.

Further, in the present embodiment, the laminated order of the fiber reinforced sheets 20 in all the fiber directions is the same in the first structure component 11, the second structure component 12, and the filler 13. Accordingly, the first structure component 11, the second structure component 12, and the filler 13 have substantially the same thermal expansion ratio even in the laminating direction. Therefore, a crack or peeling is less likely to occur in the first structure component 11, the second structure component 12, and the filler 13. It is thus possible to further reduce strength degradation of the composite material structure 10.

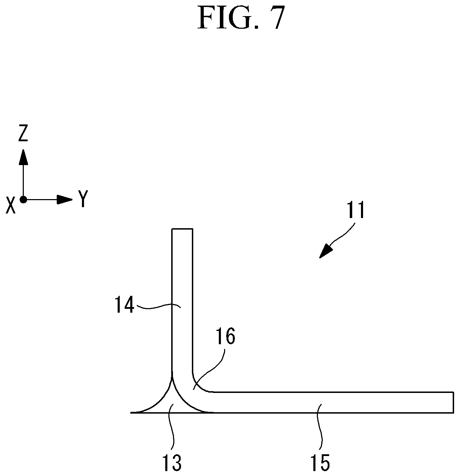

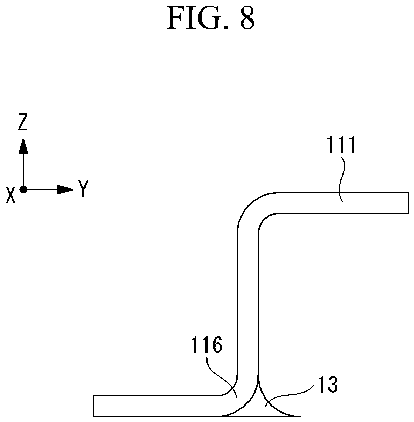

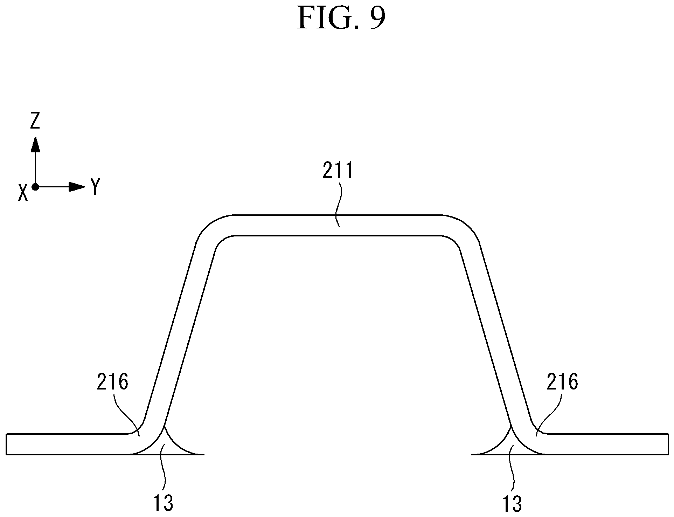

For example, although the example in which the filler 13 is provided in the curved portion 16 of the first structure component 11 whose cross-sectional shape is an L-shape has been described in the above embodiment as illustrated in Fig. 1 and Fig. 7, the shape of the structure component provided with the filler 13 is not limited thereto. For example, as illustrated in Fig. 8, the filler 13 may be provided in a curved portion 116 of a structure component 111 whose cross-sectional shape is a Z-shape. Further, as illustrated in Fig. 9, the filler 13 may be provided in a curved portion 216 of a structure component 211 whose cross-sectional shape is a hat-shape.

Further, although the example in which all the laminate ratios of the first fiber reinforced sheet 20a, the second fiber reinforced sheet 20b, the third fiber reinforced sheet 20c, and the fourth fiber reinforced sheet 20d are the same between the first structure component 11 and the filler 13 has been described in the above embodiments, the present disclosure is not limited thereto. The laminate ratio of any one type of the fiber reinforced sheets 20 only needs to be the same or substantially the same.

Further, although the example in which the laminated order of the first fiber reinforced sheet 20a, the second fiber reinforced sheet 20b, the third fiber reinforced sheet 20c, and the fourth fiber reinforced sheet 20d is the same between the first structure component 11 and the filler 13 has been described in the above embodiments, the present disclosure is not limited thereto. The laminated order only needs to be substantially the same. Substantially the same order refers to not only a case where the order is the same but also a case where the order is different to the extent that the composite material structure 10 is not damaged due to a difference in thermal expansion between the first structure component 11 and the filler 13.

Further, although the example in which the charge 30A used for producing the first structure component 11 and the charge 30B use for producing the filler 13 are separately produced has been described in the above embodiments, the present disclosure is not limited thereto. For example, the first structure component 11 and the filler 13 may be produced from the same charge. In such a case, first, in the same manner as the charges 30A, 30B described above, a plurality of fiber reinforced sheets 20 having different fiber directions are laminated, and thereby a planar plate-like charge is created. Next, the created charge is divided into the charge 30A used for producing the first structure component 11 and the charge 30B used for producing the filler 13. Then, in the same manner as described above, the first structure component 11 and the filler 13 are produced from the divided charges 30A and 30B, respectively.

By doing so, it is possible to more easily obtain the same laminate ratio and order between the first structure component 11 and the filler 13 compared to the case where two laminated bodies having the same laminate ratio and order are formed and the first structure component 11 and the filler 13 are produced from the respective laminated bodies.

The composite material structure and the manufacturing method of the composite material structure according to the embodiment described above are understood as follows, for example.

The composite material structure according to one aspect of the present disclosure includes: a first structure (11) having a plurality of laminated fiber reinforced sheets (20) and curved at a curved portion (16); and a filler (13) having a plurality of laminated fiber reinforced sheets (20) and provided in a clearance formed between the curved portion and a second structure (12) arranged side by side with the first structure, the filler being attached to the curved portion, the plurality of fiber reinforced sheets included in the first structure have the plurality of fiber reinforced sheets including a first fiber reinforced sheet (20a) whose fiber direction that is a fiber extending direction is a first direction (X-axis direction) and having different fiber directions, the plurality of fiber reinforced sheets included in the filler have the plurality of fiber reinforced sheets including the first fiber reinforced sheet and having different fiber directions, and a ratio of a total length in a laminating direction of the first fiber reinforced sheet to a total length in a laminating direction (Z-axis direction) of all the fiber reinforced sheets in the first structure and a ratio of a total length in a laminating direction of the first fiber reinforced sheet to a total length in a laminating direction of all the fiber reinforced sheets in the filler are substantially the same.

The fiber reinforced sheet less expands in the fiber direction and easily expands in a direction intersecting the fiber direction.

In the above configuration, the ratio of the total length in the laminating direction of the first fiber reinforced sheet to the total length in the laminating direction of all the fiber reinforced sheets in the first structure is substantially the same as a ratio of the total length in the laminating direction of the first fiber reinforced sheet to the total length in the laminating direction of all the fiber reinforced sheets in the filler. Accordingly, thermal expansion ratios of the first structure and the filler are substantially the same in at least the first direction that is a fiber direction of first fiber reinforced sheet. Accordingly, when the first structure and the filler are heated or cooled in a state where the filler is attached to the first structure, a crack or peeling is less likely to occur in the first structure and the filler. It is thus possible to reduce strength degradation of the composite material structure. Further, since a crack or peeling is less likely to occur, it is possible to stabilize the shape of the composite material structure.

Note that substantially the same ratio refers to not only a case where the ratios are the same but also a case where the ratios are different to the extent that the composite material structure is not damaged due to a difference in thermal expansion between the first structure component and the filler.

Further, for example, the ratio of the number of first fiber reinforced sheets to all the fiber reinforced sheet in the first structure may be substantially the same as the ratio of the number of first fiber reinforced sheets to all the fiber reinforced sheets in the filler. In such a way, with substantially the same ratio of the number of sheets, it is possible to easily obtain substantially the same ratio of the total length in the laminating direction.

Further, in the composite material structure according to one aspect of the present disclosure, the plurality of fiber reinforced sheets included in the first structure have a second fiber reinforced sheet (20b) whose fiber direction is a second direction (Y-axis direction), the plurality of fiber reinforced sheets included in the filler have the second fiber reinforced sheet, and a ratio of a total length in a laminating direction of the second fiber reinforced sheet to a total length in a laminating direction of all the fiber reinforced sheets in the first structure and a ratio of a total length in a laminating direction of the second fiber reinforced sheet to a total length in a laminating direction of all the fiber reinforced sheets in the filler are substantially the same.

In the above configuration, the ratio of the total length in the laminating direction of the second fiber reinforced sheet to the total length in the laminating direction of all the fiber reinforced sheets in the first structure is substantially the same as the ratio of the total length in the laminating direction of the second fiber reinforced sheet to the total length in the laminating direction of all the fiber reinforced sheets in the filler. Accordingly, the thermal expansion ratios of the first structure and the filler are substantially the same also in the second direction. Therefore, when the first structure and the filler are heated or cooled in a state where the filler is attached to the first structure, a crack or peeling is less likely to occur in the first structure and the filler. It is thus possible to further reduce strength degradation of the composite material structure.

Further, in the composite material structure according to one aspect of the present disclosure, the ratio of the total length in the laminating direction of the fiber reinforced sheets in each fiber direction to the total length in the laminating direction of all the fiber reinforced sheets in the first structure and the ratio of the total length in the laminating direction of the fiber reinforced sheets in each fiber direction to the total length in the laminating direction of all the fiber reinforced sheets in the filler are substantially the same in all the fiber directions.

In the above configuration, the thermal expansion ratios of the first structure and the filler are substantially the same in all the fiber directions. Therefore, when the first structure and the filler are heated or cooled in a state where the filler is attached to the first structure, a crack or peeling is less likely to occur in the first structure and the filler. It is thus possible to further reduce strength degradation of the composite material structure.

Further, in the composite material structure according to one aspect of the present disclosure, order in a laminating direction of the fiber reinforced sheets in each fiber direction is the same between the first structure and the filler.

In the above configuration, the thermal expansion ratio is substantially the same also in the laminating direction. Accordingly, when the first structure and the filler are heated or cooled in a state where the filler is attached to the first structure, a crack or peeling is less likely to occur in the first structure and the filler. It is thus possible to further reduce strength degradation of the composite material structure.

Further, in the composite material structure according to one aspect of the present disclosure, the first structure and the filler are formed of the same laminated body in which the plurality of fiber reinforced sheets having different fiber directions are laminated.

In the above configuration, the first structure and the filler are formed of the same laminated body in which the plurality of fiber reinforced sheets having different fiber directions are laminated. Accordingly, a ratio of the fiber reinforced sheets in each fiber direction to all the fiber reinforced sheets (hereinafter, referred to as "laminate ratio") is the same between the first structure and the filler in all the fiber directions. Further, the laminated order of the fiber reinforced sheets in each fiber direction is also the same between the first structure and the filler. Therefore, when the first structure and the filler are heated or cooled in a state where the filler is attached to the first structure, a crack or peeling is less likely to occur in the first structure and the filler. It is thus possible to further reduce strength degradation of the composite material structure.

Further, since the first structure and the filler are formed of the same laminated body, it is possible to more easily obtain the same laminate ratio and order between the first structure and the filler compared to the case where two laminated bodies having the same laminate ratio and order are formed and the first structure and the filler are formed from the respective laminated bodies.

The manufacturing method of the composite material structure according to one aspect of the present disclosure is a the manufacturing method of a composite material structure (10) having a first structure (11) having a plurality of laminated fiber reinforced sheets (20) and curved at a curved portion (16) and a filler (13) having a plurality of laminated fiber reinforced sheets (20) and provided in a clearance formed between the curved portion and a second structure (12) arranged side by side with the first structure, the filler being attached to the curved portion, the manufacturing method includes: a structure production step of producing the first structure from the plurality of fiber reinforced sheets including a first fiber reinforced sheet (20a) whose fiber direction that is a fiber extending direction is a first direction (X-axis direction) and having different fiber directions; and a filler production step of producing the filler from the plurality of fiber reinforced sheets including the first fiber reinforced sheet and having different fiber directions, and the structure production step and the filler production step produce the first structure and the filler so that a ratio of a total length in a laminating direction of the first fiber reinforced sheet to a total length in a laminating direction (Z-axis direction) of all the fiber reinforced sheets in the first structure and a ratio of a total length in a laminating direction of the first fiber reinforced sheet to a total length in a laminating direction of all the fiber reinforced sheets in the filler are substantially the same.

Further, in the manufacturing method of the composite material structure according to one aspect of the present disclosure, the filler production step produces the filler by cutting out the filler from laminated body (30B) in which the fiber reinforced sheets are laminated.

Further, in the manufacturing method of the composite material structure according to one aspect of the present disclosure, the filler production step produces the filler by laminating the fiber reinforced sheet having a shape in accordance with a shape of the filler.

Further, in the manufacturing method of the composite material structure according to one aspect of the present disclosure, the first structure and the filler are produced from the same laminated body in which the plurality of fiber reinforced sheets having different fiber directions are laminated.

### [Reference Symbols]

- 10: composite material structure
- 11: first structure component (first structure)
- 12: second structure component (second structure)
- 13: filler
- 13a: curved surface
- 14: bonding portion
- 15: planar plate portion
- 16: curved portion
- 17: bonding portion
- 19: curved portion
- 20: fiber reinforced sheet
- 20a: first fiber reinforced sheet
- 20b: second fiber reinforced sheet
- 20c: third fiber reinforced sheet
- 20d: fourth fiber reinforced sheet
- 30: charge
- 30A: charge
- 30B: charge (laminated body)
- 111: structure component
- 116: curved portion
- 211: structure component
- 216: curved portion

## Claims

1. A composite material structure (10) comprising:
a first structure (11) having a plurality of laminated fiber reinforced sheets (20a, 20b, 20c, 20d) and curved at a curved portion (16); and
a filler (13) having a plurality of laminated fiber reinforced sheets (20a, 20b, 20c, 20d) and provided in a clearance formed between the curved portion (16) and a second structure (12) arranged side by side along a laminating direction (Z) with the first structure (11), the filler (13) being attached to the curved portion (16),
wherein the plurality of fiber reinforced sheets (20a, 20b, 20c, 20d) included in the first structure (11) have different fiber directions and include a first fiber reinforced sheet (20a) whose fiber direction that is a fiber extending direction is a first direction; and,
wherein a plurality of fiber reinforced sheets (20a, 20b, 20c, 20d) included in the filler (13) have different fiber directions and include a first fiber reinforced sheet (20a);
**characterized in that**
a ratio of a total length in the laminating direction (Z) of the first fiber reinforced sheet (20a) to a total length in the laminating direction (Z) of all the fiber reinforced sheets (20a, 20b, 20c, 20d) in the first structure (11) and a ratio of a total length in the laminating direction (Z) of the first fiber reinforced sheet (20a) to a total length in the laminating direction (Z) of all the fiber reinforced sheets (20a, 20b, 20c, 20d) in the filler (13) are substantially the same.

2. The composite material structure according to claim 1,
wherein the plurality of fiber reinforced sheets (20a, 20b, 20c, 20d) included in the first structure (11) have a second fiber reinforced sheet (20b) whose fiber direction is a second direction,
wherein the plurality of fiber reinforced sheets (20a, 20b, 20c, 20d) included in the filler (13) have the second fiber reinforced sheet (20b), and
wherein a ratio of a total length in the laminating direction (Z) of the second fiber reinforced sheet (20b) to a total length in the laminating direction (Z) of all the fiber reinforced sheets (20a, 20b, 20c, 20d) in the first structure (11) and a ratio of a total length in the laminating direction (Z) of the second fiber reinforced sheet (20b) to a total length in the laminating direction (Z) of all the fiber reinforced sheets (20a, 20b, 20c, 20d) in the filler (13) are substantially the same.

3. The composite material structure according to claim 1 or 2, wherein a ratio of a total length in the laminating direction (Z) of the fiber reinforced sheets (20a, 20b, 20c, 20d) in each fiber direction to a total length in the laminating direction (Z) of all the fiber reinforced sheets (20a, 20b, 20c, 20d) in the first structure (11) and a ratio of a total length in the laminating direction (Z) of the fiber reinforced sheets (20a, 20b, 20c, 20d) in each fiber direction to a total length in the laminating direction (Z) of all the fiber reinforced sheets (20a, 20b, 20c, 20d) in the filler (13) are substantially the same in all fiber directions.

4. The composite material structure according to claim 3, wherein the order in the laminating direction (Z) of the fiber reinforced sheets (20a, 20b, 20c, 20d) in each fiber direction is the same between the first structure (11) and the filler (13).

5. The composite material structure according to any one of claims 1 to 4, wherein the first structure (11) and the filler (13) are formed of the same laminated body (30B) in which the plurality of fiber reinforced sheets (20a, 20b, 20c, 20d) having different fiber directions are laminated.

6. A manufacturing method of a composite material structure (10) comprising a first structure (11) having a plurality of laminated fiber reinforced sheets (20a, 20b, 20c, 20d) and curved at a curved portion (16) and a filler (13) having a plurality of laminated fiber reinforced sheets (20a, 20b, 20c, 20d) and provided in a clearance formed between the curved portion (16) and a second structure (12) arranged side by side along a laminating direction (Z) with the first structure (11), the filler (13) being attached to the curved portion (16), the manufacturing method comprising:
a structure production step of producing the first structure (11) from the plurality of fiber reinforced sheets (20a, 20b, 20c, 20d) having different fiber directions and including a first fiber reinforced sheet (20a) whose fiber direction that is a fiber extending direction is a first direction; and
a filler production step of producing the filler (13) from a plurality of fiber reinforced sheets (20a, 20b, 20c, 20d) having different fiber directions and including a first fiber reinforced sheet (20a);
**characterized in that**
the structure production step and the filler production step produce the first structure (11) and the filler (13) so that a ratio of a total length in the laminating direction (Z) of the first fiber reinforced sheet (20a) to a total length in the laminating direction (Z) of all the fiber reinforced sheets (20a, 20b, 20c, 20d) in the first structure (11) and a ratio of a total length in the laminating direction (Z) of the first fiber reinforced sheet (20a) to a total length in the laminating direction (Z) of all the fiber reinforced sheets (20a, 20b, 20c, 20d) in the filler (13) are substantially the same.

7. The manufacturing method of the composite material structure according to claim 6, wherein the filler production step produces the filler (13) by cutting out the filler from a laminated body (30B) in which the fiber reinforced sheets (20a, 20b, 20c, 20d) are laminated.

8. The manufacturing method of the composite material structure according to claim 6, wherein the filler production step produces the filler (13) by laminating the fiber reinforced sheet (20) having a shape in accordance with a shape of the filler (13).

9. The manufacturing method of the composite material structure according to claim 6, wherein the first structure (11) and the filler (13) are produced from the same laminated body (30B) in which the plurality of fiber reinforced sheets (20a, 20b, 20c, 20d) having different fiber directions are laminated.

## Patentansprüche

1. Verbundmaterialstruktur (10), umfassend:
eine erste Struktur (11), die eine Vielzahl von laminierten faserverstärkten Blättern (20a, 20b, 20c, 20d) aufweist und an einem gekrümmten Abschnitt (16) gekrümmt ist; und
einen Füllstoff (13), der eine Vielzahl von laminierten faserverstärkten Blättern (20a, 20b, 20c, 20d) aufweist und in einem Zwischenraum bereitgestellt ist, der zwischen dem gekrümmten Abschnitt (16) und einer zweiten Struktur (12) gebildet ist, die nebeneinander entlang einer Laminierungsrichtung (Z) mit der ersten Struktur (11) angeordnet sind, wobei der Füllstoff (13) am gekrümmten Abschnitt (16) angebracht ist,
wobei die Vielzahl von faserverstärkten Blättern (20a, 20b, 20c, 20d), die in der ersten Struktur (11) eingeschlossen sind, unterschiedliche Faserrichtungen aufweisen und ein erstes faserverstärktes Blatt (20a) einschließen, deren Faserrichtung, die eine Fasererstreckungsrichtung ist, eine erste Richtung ist; und
wobei eine Vielzahl von im Füllstoff (13) eingeschlossenen faserverstärkten Blättern (20a, 20b, 20c, 20d) unterschiedliche Faserrichtungen aufweisen und ein erstes faserverstärktes Blatt (20a) einschließen;
**dadurch gekennzeichnet, dass**
ein Verhältnis einer Gesamtlänge in der Laminierungsrichtung (Z) des ersten faserverstärkten Blattes (20a) zu einer Gesamtlänge in der Laminierungsrichtung (Z) aller faserverstärkten Blätter (20a, 20b, 20c, 20d) in der ersten Struktur (11) und ein Verhältnis einer Gesamtlänge in der Laminierungsrichtung (Z) des ersten faserverstärkten Blattes (20a) zu einer Gesamtlänge in der Laminierungsrichtung (Z) aller faserverstärkten Blätter (20a, 20b, 20c, 20d) in dem Füllstoff (13) im Wesentlichen gleich sind.

2. Verbundmaterialstruktur nach Anspruch 1,
wobei die Vielzahl von faserverstärkten Blättern (20a, 20b, 20c, 20d), die in der ersten Struktur (11) eingeschlossen sind, ein zweites faserverstärktes Blatt (20b) aufweisen, dessen Faserrichtung eine zweite Richtung ist,
wobei die Vielzahl von faserverstärkten Blättern (20a, 20b, 20c, 20d), die im Füllstoff (13) eingeschlossen sind, das zweite faserverstärkte Blatt (20b) aufweisen, und
wobei ein Verhältnis einer Gesamtlänge in der Laminierungsrichtung (Z) des zweiten faserverstärkten Blattes (20b) zu einer Gesamtlänge in der Laminierungsrichtung (Z) aller faserverstärkten Blätter (20a, 20b, 20c, 20d) in der ersten Struktur (11) und ein Verhältnis einer Gesamtlänge in der Laminierungsrichtung (Z) des zweiten faserverstärkten Blattes (20b) zu einer Gesamtlänge in der Laminierungsrichtung (Z) aller faserverstärkten Blätter (20a, 20b, 20c, 20d) in dem Füllstoff (13) im Wesentlichen gleich sind.

3. Verbundmaterialstruktur nach Anspruch 1 oder 2, wobei ein Verhältnis einer Gesamtlänge in der Laminierungsrichtung (Z) der faserverstärkten Blätter (20a, 20b, 20c, 20d) in jeder Faserrichtung zu einer Gesamtlänge in der Laminierungsrichtung (Z) aller faserverstärkten Blätter (20a, 20b, 20c, 20d) in der ersten Struktur (11) und ein Verhältnis einer Gesamtlänge in der Laminierungsrichtung (Z) der faserverstärkten Blätter (20a, 20b, 20c, 20d) in jeder Faserrichtung zu einer Gesamtlänge in der Laminierungsrichtung (Z) aller faserverstärkten Blätter (20a, 20b, 20c, 20d) in dem Füllstoff (13) in allen Faserrichtungen im Wesentlichen gleich sind.

4. Verbundmaterialstruktur nach Anspruch 3, wobei die Reihenfolge in der Laminierungsrichtung (Z) der faserverstärkten Blätter (20a, 20b, 20c, 20d) in jeder Faserrichtung zwischen der ersten Struktur (11) und dem Füllstoff (13) gleich ist.

5. Verbundmaterialstruktur nach einem der Ansprüche 1 bis 4, wobei die erste Struktur (11) und der Füllstoff (13) aus demselben laminierten Körper (30B) gebildet sind, in dem die Vielzahl von faserverstärkten Blättern (20a, 20b, 20c, 20d), die unterschiedliche Faserrichtungen aufweisen, laminiert sind.

6. Herstellungsverfahren für eine Verbundmaterialstruktur (10), umfassend eine erste Struktur (11), die eine Vielzahl von laminierten faserverstärkten Blättern (20a, 20b, 20c, 20d) aufweist, und an einem gekrümmten Abschnitt (16) gekrümmt ist, und einen Füllstoff (13), der eine Vielzahl von laminierten faserverstärkten Blättern (20a, 20b, 20c, 20d) aufweist und in einem Zwischenraum bereitgestellt ist, der zwischen dem gekrümmten Abschnitt (16) und einer zweiten Struktur (12) gebildet ist, die nebeneinander entlang einer Laminierungsrichtung (Z) mit der ersten Struktur (11) angeordnet sind, wobei der Füllstoff (13) am gekrümmten Abschnitt (16) angebracht ist, wobei das Herstellungsverfahren umfasst:
einen Strukturherstellungsschritt zum Herstellen der ersten Struktur (11) aus der Vielzahl von faserverstärkten Blättern (20a, 20b, 20c, 20d), die unterschiedliche Faserrichtungen aufweisen und ein erstes faserverstärktes Blatt (20a) einschließen, deren Faserrichtung, die eine Fasererstreckungsrichtung ist, eine erste Richtung ist; und
einen Füllstoffherstellungsschritt zum Herstellen des Füllstoffs (13) aus einer Vielzahl von faserverstärkten Blättern (20a, 20b, 20c, 20d), die unterschiedliche Faserrichtungen aufweisen und ein erstes faserverstärktes Blatt (20a) einschließen;
**dadurch gekennzeichnet, dass**
der Strukturherstellungsschritt und der Füllstoffherstellungsschritt die erste Struktur (11) und den Füllstoff (13) erzeugen, sodass ein Verhältnis einer Gesamtlänge in der Laminierungsrichtung (Z) des ersten faserverstärkten Blattes (20a) zu einer Gesamtlänge in der Laminierungsrichtung (Z) aller faserverstärkten Blätter (20a, 20b, 20c, 20d) in der ersten Struktur (11) und ein Verhältnis einer Gesamtlänge in der Laminierungsrichtung (Z) des ersten faserverstärkten Blattes (20a) zu einer Gesamtlänge in der Laminierungsrichtung (Z) aller faserverstärkten Blätter (20a, 20b, 20c, 20d) in dem Füllstoff (13) im Wesentlichen gleich sind.

7. Herstellungsverfahren der Verbundmaterialstruktur nach Anspruch 6, wobei der Füllstoffherstellungsschritt den Füllstoff (13) durch Ausschneiden des Füllstoffs aus einem laminierten Körper (30B), in dem die faserverstärkten Blätter (20a, 20b, 20c, 20d) laminiert sind, erzeugt.

8. Herstellungsverfahren der Verbundmaterialstruktur nach Anspruch 6, wobei der Füllstoffherstellungsschritt den Füllstoff (13) durch Laminieren des faserverstärkten Blattes (20), das eine Form entsprechend einer Form des Füllstoffs (13) aufweist, erzeugt.

9. Herstellungsverfahren der Verbundmaterialstruktur nach Anspruch 6, wobei die erste Struktur (11) und der Füllstoff (13) aus demselben laminierten Körper (30B) hergestellt werden, in dem die Vielzahl von faserverstärkten Blättern (20a, 20b, 20c, 20d), die unterschiedliche Faserrichtungen aufweisen, laminiert sind.

## Revendications

1. Structure en matériau composite (10) comprenant :
une première structure (11) présentant une pluralité de feuilles (20a, 20b, 20c, 20d) renforcées de fibres stratifiées et incurvées au niveau d'une partie incurvée (16) ; et
une charge (13) présentant une pluralité de feuilles (20a, 20b, 20c, 20d) renforcées de fibres stratifiées et prévues dans un espace formé entre la partie incurvée (16) et une deuxième structure (12) agencées côte à côte le long d'une direction de stratification (Z) avec la première structure (11), la charge (13) étant attachée à la partie incurvée (16),
dans laquelle la pluralité de feuilles (20a, 20b, 20c, 20d) renforcées de fibres incluses dans la première structure (11) présentent des directions de fibres différentes et incluent une première feuille (20a) renforcée de fibres dont la direction de fibres qui est une direction d'extension de fibres est une première direction ; et
dans laquelle une pluralité de feuilles (20a, 20b, 20c, 20d) renforcées de fibres incluses dans la charge (13) présentent des directions de fibres différentes et incluent une première feuille (20a) renforcée de fibres ;
**caractérisée en ce que**
un rapport d'une longueur totale dans la direction de stratification (Z) de la première feuille (20a) renforcée de fibres à une longueur totale dans la direction de stratification (Z) de toutes les feuilles (20a, 20b, 20c, 20d) renforcées de fibres dans la première structure (11) et un rapport d'une longueur totale dans la direction de stratification (Z) de la première feuille (20a) renforcée de fibres à une longueur totale dans la direction de stratification (Z) de toutes les feuilles (20a, 20b, 20c, 20d) renforcées de fibres dans la charge (13) sont sensiblement les mêmes.

2. Structure en matériau composite selon la revendication 1,
dans laquelle la pluralité de feuilles (20a, 20b, 20c, 20d) renforcées de fibres incluses dans la première structure (11) présentent une deuxième feuille (20b) renforcée de fibres dont la direction de fibres est une deuxième direction,
dans laquelle la pluralité de feuilles (20a, 20b, 20c, 20d) renforcées de fibres incluses dans la charge (13) présentent la deuxième feuille (20b) renforcée de fibres, et
dans laquelle un rapport d'une longueur totale dans la direction de stratification (Z) de la deuxième feuille (20b) renforcée de fibres à une longueur totale dans la direction de stratification (Z) de toutes les feuilles (20a, 20b, 20c, 20d) renforcées de fibres dans la première structure (11) et un rapport d'une longueur totale dans la direction de stratification (Z) de la deuxième feuille (20b) renforcée de fibres à une longueur totale dans la direction de stratification (Z) de toutes les feuilles (20a, 20b, 20c, 20d) renforcées de fibres dans la charge (13) sont sensiblement les mêmes.

3. Structure en matériau composite selon la revendication 1 ou la revendication 2, dans laquelle un rapport d'une longueur totale dans la direction de stratification (Z) des feuilles (20a, 20b, 20c, 20d) renforcées de fibres dans chaque direction de fibres à une longueur totale dans la direction de stratification (Z) de toutes les feuilles (20a, 20b, 20c, 20d) renforcées de fibres dans la première structure (11) et un rapport d'une longueur totale dans la direction de stratification (Z) des feuilles (20a, 20b, 20c, 20d) renforcées de fibres dans chaque direction de fibres à une longueur totale dans la direction de stratification (Z) de toutes les feuilles (20a, 20b, 20c, 20d) renforcées de fibres dans la charge (13) sont sensiblement les mêmes dans toutes les directions de fibres.

4. Structure en matériau composite selon la revendication 3, dans laquelle l'ordre dans la direction de stratification (Z) des feuilles (20a, 20b, 20c, 20d) renforcées de fibres dans chaque direction de fibres est le même entre la première structure (11) et la charge (13).

5. Structure en matériau composite selon l'une quelconque des revendications 1 à 4, dans laquelle la première structure (11) et la charge (13) sont formées du même corps (30B) stratifié dans lequel la pluralité de feuilles (20a, 20b, 20c, 20d) renforcées de fibres présentant des directions de fibres différentes sont stratifiées.

6. Procédé de fabrication d'une structure en matériau composite (10) comprenant une première structure (11) présentant une pluralité de feuilles (20a, 20b, 20c, 20d) renforcées de fibres stratifiées et incurvées au niveau d'une partie incurvée (16) et une charge (13) présentant une pluralité de feuilles (20a, 20b, 20c, 20d) renforcées de fibres stratifiées et prévues dans un espace formé entre la partie incurvée (16) et une deuxième structure (12) agencées côte à côte le long d'une direction de stratification (Z) avec la première structure (11), la charge (13) étant attachée à la partie incurvée (16), le procédé de fabrication comprenant :
une étape de production de structure consistant à produire la première structure (11) à partir de la pluralité de feuilles (20a, 20b, 20c, 20d) renforcées de fibres présentant des directions de fibres différentes et incluant une première feuille (20a) renforcée de fibres dont la direction de fibres qui est une direction d'extension de fibres est une première direction ; et
une étape de production de charge consistant à produire la charge (13) à partir d'une pluralité de feuilles (20a, 20b, 20c, 20d) renforcées de fibres présentant des directions de fibres différentes et incluant une première feuille (20a) renforcée de fibres ;
**caractérisé en ce que**
l'étape de production de structure et l'étape de production de charge produisent la première structure (11) et la charge (13) de sorte qu'un rapport d'une longueur totale dans la direction de stratification (Z) de la première feuille (20a) renforcée de fibres à une longueur totale dans la direction de stratification (Z) de toutes les feuilles (20a, 20b, 20c, 20d) renforcées de fibres dans la première structure (11) et un rapport d'une longueur totale dans la direction de stratification (Z) de la première feuille (20a) renforcée de fibres à une longueur totale dans la direction de stratification (Z) de toutes les feuilles (20a, 20b, 20c, 20d) renforcées de fibres dans la charge (13) sont sensiblement les mêmes.

7. Procédé de fabrication de la structure en matériau composite selon la revendication 6, dans lequel l'étape de production de charge produit la charge (13) en coupant la charge d'un corps (30B) stratifié dans lequel les feuilles (20a, 20b, 20c, 20d) renforcées de fibres sont stratifiées.

8. Procédé de fabrication de la structure en matériau composite selon la revendication 6, dans lequel l'étape de production de charge produit la charge (13) en stratifiant la feuille (20) renforcée de fibres présentant une forme correspondant à une forme de la charge (13).

9. Procédé de fabrication de la structure en matériau composite selon la revendication 6, dans lequel la première structure (11) et la charge (13) sont produites à partir du même corps (30B) stratifié dans lequel la pluralité de feuilles (20a, 20b, 20c, 20d) renforcées de fibres présentant des directions de fibres différentes sont stratifiées.
